# EUROPÄISCHE PATENTSCHRIFT

(11) **EP 3 362 262 B1**
(45) Veröffentlichungstag und Bekanntmachung des Hinweises auf die Patenterteilung: **22.04.2020**
(21) Anmeldenummer: 16805752.9
(22) Anmeldetag: 25.11.2016
(51) Int. Cl.: B29C 67/00, B33Y 10/00, B33Y 30/00, B33Y 50/02, B22F 3/105

(54) **VERFAHREN UND BESCHICHTER FÜR EINE VORRICHTUNG ZUM HERSTELLEN EINES DREIDIMENSIONALEN OBJEKTS**
METHOD AND RECOATER FOR A DEVICE FOR THE PRODUCTION OF A THREE-DIMENSIONAL OBJECT
PROCÉDÉ ET DISPOSITIF D'APPLICATION D'UNE COUCHE POUR DISPOSITIF DE FABRICATION D'UN OBJET TRIDIMENSIONNEL

(30) Priorität: 26.11.2015 DE 102015223474
(43) Veröffentlichungstag der Anmeldung: 22.08.2018
(73) Patentinhaber: EOS GmbH Electro Optical Systems, 82152 Krailling (DE)
(72) Erfinder: SCHADE, Martin, 80809 München (DE)
(74) Vertreter: Prüfer & Partner mbB Patentanwälte · Rechtsanwälte
(86) Internationale Anmeldenummer: PCT/EP2016/078757
(87) Internationale Veröffentlichungsnummer: WO 2017/089510

(56) Entgegenhaltungen:
- EP-A1- 2 832 473
- WO-A1-2015/032974
- DE-A1-102011 111 818
- US-A1- 2015 273 583

## Beschreibung

Die vorliegende Erfindung bezieht sich auf ein Verfahren und eine Vorrichtung zum Herstellen eines dreidimensionalen Objekts durch schichtweises Aufbringen und selektives Verfestigen eines pulverförmigen Aufbaumaterials.

Verfahren und Vorrichtungen dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

Es ist bekannt, bei solchen Verfahren und Vorrichtungen optische Aufnahmen von der aufgebrachten und/oder verfestigten Pulverschicht zu machen, diese auszuwerten und je nach Ergebnis der Auswertung eventuell steuernd in den Herstellungsprozess einzugreifen.

Aus der EP 1 296 788 B1 ist ein Verfahren zum Herstellen eines dreidimensionalen Objekts durch schichtweises Schmelzen eines pulverförmigen Materials an den dem Objekt entsprechenden Stellen der jeweiligen Schicht mittels einer Elektronenstrahlkanone bekannt. Zum Erfassen der Oberflächeneigenschaften einer Oberflächenschicht in dem Pulverbett wird eine Kamera verwendet, die teilweise die Temperaturverteilung der Oberflächenschicht misst und teilweise das Auftreten von Oberflächenunregelmäßigkeiten aufgrund von Schatteninformationen erfasst, die durch diese Unregelmäßigkeiten entstehen.

DE 10 2005 015 870 B3 beschreibt eine Vorrichtung und ein Verfahren zum Herstellen von dreidimensionalen Objekten durch lokales Verfestigen von Schichten eines Aufbaumaterials an den dem jeweiligen Querschnitt des Objekts entsprechenden Stellen durch Einwirken von elektromagnetischer oder Teilchenstrahlung. Die Vorrichtung enthält eine Temperaturmesseinrichtung zum berührungslosen Messen der Temperatur des Aufbaumaterials in einem Messbereich, der ein Teilbereich der Schicht des Aufbaumaterials ist, und weiter eine Lageeinstelleinrichtung zum Ändern der Lage des Messbereichs der Temperaturmesseinrichtung. In einer Anwandlung der beschriebenen Ausführungsform wird eine IR-Kamera als Temperaturmesseinrichtung verwendet, in einer anderen Abwandlung eine einzeilige CCD-Kamera mit einem entlang einer ersten Richtung ausgedehnten Messbereich, dessen Lage in einer zweiten Richtung senkrecht zu der ersten Richtung veränderlich ist.

DE 10 2013 208 651 A1 beschreibt ein Verfahren zum automatischen Kalibrieren einer Vorrichtung zum generativen Herstellen eines dreidimensionalen Objekts, die mehr als eine Bestrahlungsvorrichtung enthält. Dabei wird beispielsweise eine aufgetragene Schicht eines Materials oder eines Targets durch die erste Bestrahlungsvorrichtung bestrahlt, um ein erstes Testmuster zu erzeugen, und dann wird eine aufgetragene Schicht eines Materials oder ein Target durch die zweite Bestrahlungsvorrichtung bestrahlt, um ein zweites Testmuster zu erzeugen. Beide Testmuster werden von einer Kamera erfasst und miteinander oder mit einem Referenzmuster verglichen.

US 6,492,651 B1 beschreibt ein SDM-Verfahren (Selective Deposition Modeling, Modellieren durch selektives Abscheiden), bei dem an vorbestimmten Stellen eine Höheninformation mittels einer Lasertriangulation gewonnen wird. Dabei strahlt ein Laser einen Strahl senkrecht auf einen zu vermessenden Bereich, und das gestreute Licht wird auf einen optischen Sensor fokussiert, dessen optische Achse schräg zu dem Laserstrahl verläuft. Alternativ ist die optische Achse des Sensors senkrecht und der Laserstrahl fällt schräg ein.

US 2015/027358 A1 beschreibt eine additive Herstellvorrichtung zum Herstellen eines dreidimensionalen Objekts, bei dem ein Zeilensensor, beispielsweise eine Kamera, mit dem Beschichter über das Baufeld verfahren wird um eine selektiv verfestigte Aufbaumaterialschicht zu erfassen.

Die Aufgabe der vorliegenden Erfindung besteht darin, ein alternatives, vorzugsweise verbessertes Verfahren bzw. eine alternative, vorzugsweise verbesserte Vorrichtung zum Herstellen eines dreidimensionalen Objekts durch schichtweises Aufbringen und selektives Verfestigen eines Aufbaumaterials bereitzustellen, mit denen es möglich ist, ein Verfahren zur Prozesssteuerung mithilfe einer optischen Erfassung mindestens eines Teilbereichs des Baufelds durchzuführen.

Die Aufgabe wird gelöst durch einen Beschichter gemäß Anspruch 1, eine Vorrichtung gemäß Anspruch 8, ein Verfahren zur Prozesssteuerung gemäß Anspruch 10 und ein Verfahren zum Herstellen eines dreidimensionalen Objekts gemäß Anspruch 15. Weiterbildungen der Erfindung sind jeweils in den Unteransprüchen angegeben. Jeder der unabhängigen Ansprüche kann dabei sowohl durch die Unteransprüche der anderen unabhängigen Ansprüche als auch durch die in der Beschreibung aufgeführten Merkmale der Vorrichtungen und Verfahren weitergebildet sein.

Der erfindungsgemäße Beschichter dient zum Auftragen eines Aufbaumaterials in einer Vorrichtung zum Herstellen eines dreidimensionalen Objekts innerhalb eines Baufelds durch Verfestigen von Schichten des Aufbaumaterials an den dem jeweiligen Querschnitt des Objekts entsprechenden Stellen. Der Beschichter ist geeignet, eine Aufbaumaterialschicht durch eine Bewegung über das Baufeld in einer Bewegungsrichtung aufzutragen und weist eine erste Scanvorrichtung, die einen ersten Zeilensensor enthält, zur Erfassung mindestens eines Teilbereichs des Baufelds auf. Die Verwendung eines solchen Beschichters ermöglicht es beispielsweise, ein Verfahren zur Prozesssteuerung mithilfe einer optischen Erfassung mindestens eines Teilbereichs des Baufelds durchzuführen.

Vorzugsweise ist die erste Scanvorrichtung in der Bewegungsrichtung des Beschichters vor oder hinter dem Beschichter angeordnet. Dadurch kann beispielsweise eingestellt werden, ob die Scanvorrichtung ein Bild einer bereits selektiv verfestigten Schicht oder ein Bild einer neu aufgebrachten Schicht aufnimmt.

Vorzugsweise enthält der Beschichter weiter eine zweite Scanvorrichtung, die einen zweiten Zeilensensor, zur Erfassung mindestens eines Teilbereichs des Baufelds aufweist, wobei die zweite Scanvorrichtung vorzugsweise in der Bewegungsrichtung des Beschichters auf der anderen Seite des Beschichters angeordnet ist als die erste Scanvorrichtung. Dadurch kann beispielsweise sowohl ein Bild einer bereits selektiv verfestigten Schicht als auch ein Bild einer neu aufgebrachten Schicht aufgenommen werden.

Vorzugsweise ist die Längsausdehnung des ersten und/oder zweiten Zeilensensors quer, insbesondere senkrecht, zur Bewegungsrichtung des Beschichters für den Materialauftrag, und ein Aufnahmebereich des ersten und/oder zweiten Zeilensensors erstreckt sich vorzugsweise im Wesentlichen entlang des gesamten zum Aufbringen des Aufbaumaterials geeigneten Bereichs des Beschichters. Dadurch kann beispielsweise ein zweidimensionales Bild des Baufelds vorteilhaft aufgenommen werden.

Vorzugsweise weist der erste und/oder zweite Zeilensensor einen CCD-Zeilensensor, einen CMOS-Zeilensensor oder eine Zeile aus Photodioden, Bolometern oder pyroelektrischen Sensoren auf. Diese Sensoren sind beispielsweise gut geeignet, ein Bild des Baufelds aufzunehmen.

Erfindungsgemäß enthält die erste Scanvorrichtung eine Lichtquelle, die sich vorzugsweise entlang eines gesamten Aufnahmebereichs des ersten und/oder zweiten Zeilensensors erstreckt, wobei die Lichtquelle vorzugsweise durch eine längliche Lichtquelle oder durch eine Reihe punktförmiger Lichtquellen gebildet ist. Dadurch kann beispielsweise auch bei ungünstigen Lichtverhältnissen ein gutes Bild des Baufelds aufgenommen werden.

Vorzugsweise ist die erste und/oder zweite Scanvorrichtung zumindest in Teilen lösbar an dem Beschichter angebracht. Dadurch kann beispielsweise die erste und/oder zweite Scanvorrichtung bei Bedarf leicht von dem Beschichter gelöst werden.

Eine erfindungsgemäße Vorrichtung zum Herstellen eines dreidimensionalen Objekts innerhalb eines Baufelds durch Verfestigen von Schichten eines Aufbaumaterials an den dem jeweiligen Querschnitt des Objekts entsprechenden Stellen enthält einen über das Baufeld verfahrbaren Beschichter, der geeignet ist, eine Aufbaumaterialschicht durch eine Bewegung über das Baufeld in einer Bewegungsrichtung aufzutragen, und zumindest eine über das Baufeld verfahrbare Scanvorrichtung, die einen Zeilensensor enthält, der zur Erfassung mindestens eines Teilbereichs des Baufelds geeignet ist. In einer solchen Vorrichtung ist es beispielsweise möglich, ein Verfahren zur Prozesssteuerung mithilfe einer optischen Erfassung mindestens eines Teilbereichs des Baufelds durchzuführen.

Erfindungsgemäß enthält die Scanvorrichtung eine Lichtquelle, deren Lichtabgabebereich sich vorzugsweise entlang eines gesamten Aufnahmebereichs des Zeilensensors erstreckt und die vorzugsweise durch eine längliche Lichtquelle oder durch eine Reihe punktförmiger Lichtquellen gebildet ist. Vorzugsweise ist die Scanvorrichtung an dem Beschichter angebracht, vorzugsweise zumindest in Teilen lösbar an dem Beschichter angebracht, und/oder die Vorrichtung enthält einen außerhalb des Baufelds angebrachten Abstreifer, vorzugsweise mit einer Abstreiflippe oder einer Bürste zum Abstreifen eines optischen Fensters der Scanvorrichtung. Dadurch kann beispielsweise auch bei ungünstigen Lichtverhältnissen ein gutes Bild des Baufelds aufgenommen werden, und/oder die Scanvorrichtung kann beispielsweise auf einfache Weise über das Baufeld bewegt werden, ohne einen eigenen Antrieb zu benötigen, und/oder das optische Fenster der Scanvorrichtung kann beispielsweise von Verschmutzungen gereinigt werden.

Das erfindungsgemäße Verfahren zur Prozesssteuerung erfolgt in einer Vorrichtung zum Herstellen eines dreidimensionalen Objekts der oben beschriebenen Art, wobei mindestens ein Teilbereich des Baufelds mittels der Scanvorrichtung, die den Zeilensensor enthält, erfasst wird. Ein solches Verfahren ermöglicht es beispielsweise, eine Prozesssteuerung auf der Grundlage der mithilfe der optischen Erfassung mindestens eines Teilbereichs des Baufelds gewonnenen Ergebnisse durchzuführen.

Vorzugsweise werden ausgehend von dem von der Scanvorrichtung erfassten Bild mindestens des Teilbereichs des Baufelds Unebenheiten und/oder Fehlstellen in der neu aufgebrachten Schicht erfasst und/oder Abmessungen und/oder Oberflächenbeschaffenheit der verfestigten Bereiche der bereits selektiv verfestigten Schicht erfasst. Dadurch können beispielsweise aufgrund des erfassten Bilds des Baufelds eine Qualitätskontrolle durchgeführt und Maßnahmen zur Qualitätsverbesserung ergriffen werden.

Vorzugsweise wird eine Vorrichtung verwendet, die eine Belichtungseinheit enthält, die in der Lage ist, eine zum Verfestigen des Aufbaumaterials geeignete Wellen- oder Teilchenstrahlung auszusenden, wobei die Prozesssteuerung eine Kalibrierung der Belichtungseinheit mit folgenden Schritten umfasst: Bewegen der Scanvorrichtung über ein Testmuster mit vorbestimmten Abmessungen und Aufnehmen eines Bildes des Testmusters, Vergleichen des aufgenommenen Bildes mit den vorbestimmten Abmessungen des Testmusters und Bestimmen erster Korrekturdaten zum Kalibrieren der Scanvorrichtung, Belichten von Referenzmarkierungen mit vorbestimmten Sollpositionen mittels der Belichtungsvorrichtung auf ein lichtempfindliches Target oder eine aufgebrachten Schicht des Aufbaumaterials, Bewegen der Scanvorrichtung über das belichtete Target oder die belichtete Schicht und Aufnehmen eines Bildes der Referenzmarkierungen, Vergleichen der mittels der ersten Korrekturdaten aus dem aufgenommenen Bild ermittelten Istpositionen der Referenzmarkierungen mit ihren Sollpositionen und Bestimmen zweiter Korrekturdaten zum Kalibrieren der Belichtungsvorrichtung. Ein solches Verfahren ermöglicht es beispielsweise, die Belichtungsvorrichtung so zu kalibrieren, dass das Licht immer mit hinreichender Genauigkeit auf die gewünschten Positionen des Baufelds auftrifft.

Vorzugsweise wird eine Vorrichtung verwendet, die einen höhenverstellbaren Träger enthält, der eine Bauplattform trägt, auf der das Objekt aufgebaut werden soll, oder selber als Bauplattform dient, wobei die Prozesssteuerung eine Bestimmung der Ausrichtung der Scanvorrichtung relativ zu dem Träger oder der Bauplattform mit folgenden Schritten umfasst: Auflegen eines Testmusters mit Referenzmarkierungen auf den Träger oder die Bauplattform, wiederholtes Bewegen der Scanvorrichtung über das Testmuster und Aufnehmen eines Bildes des Testmusters, wobei bei jeder Wiederholung der Träger um einen vorbestimmte Höhe angehoben oder abgesenkt wird, Bestimmen, welche Referenzmarkierung in welchem Bild am schärfsten abgebildet ist, und Bestimmen eines Winkels für zumindest zwei Referenzmarkierungen, um den eine Verbindungslinie zwischen den Referenzmarkierungen gegenüber einer von der Scanvorrichtung abgefahrenen Ebene verkippt ist, aus der Anzahl von Bildern, die zwischen den Bildern liegen, in denen die Referenzmarkierungen am schärfsten abgebildet sind, und dem Abstand der Referenzmarkierungen voneinander. Ein solches Verfahren ermöglicht es beispielsweise, eine Verkippung zwischen dem Träger und der Beschichtungsebene zu erfassen und zu korrigieren.

Vorzugsweise wird eine Vorrichtung verwendet, die einen höhenverstellbaren Träger enthält, der eine Bauplattform trägt, auf der das Objekt aufgebaut werden soll, oder selber als Bauplattform dient, wobei die Prozesssteuerung eine Bestimmung der Ebenheit des Trägers oder der Bauplattform mit folgenden Schritten umfasst: Auflegen eines Testmuster mit Referenzmarkierungen auf den Träger oder die Bauplattform oder Belichten der Referenzmarkierungen direkt auf den Träger oder die Bauplattform, wiederholtes Bewegen der Scanvorrichtung über die Referenzmarkierungen und Aufnehmen eines Bildes der Referenzmarkierungen, wobei bei jeder Wiederholung der Träger um einen vorbestimmte Höhe angehoben oder abgesenkt wird, Bestimmen, welche Referenzmarkierung in welchem Bild am schärfsten abgebildet ist, und Bestimmen eines Höhenprofils des Trägers oder der Bauplattform aus den Bildern, in denen die Referenzmarkierungen am schärfsten abgebildet sind, und den Positionen der jeweiligen Referenzmarkierungen. Ein solches Verfahren ermöglicht es beispielsweise, eine Ebenheit des Trägers zu überprüfen und im weiteren Prozess zu berücksichtigen.

Das erfindungsgemäße Verfahren zum Herstellen eines dreidimensionalen Objekts enthält die Schritte: Auftragen einer Schicht eines pulverförmigen Materials mit einem Beschichter durch Bewegen des Beschichters über ein Baufelds; Verfestigen der Schicht an den einem Querschnitt des Objekts entsprechenden Stellen; und Wiederholen der Schritte des Auftragens und des Verfestigens, bis das dreidimensionale Objekt fertiggestellt ist, wobei im Rahmen eines Prozesssteuerungsverfahrens der oben beschriebenen Art das Baufeld während eines Schichtauftrags durch die Scanvorrichtung zumindest teilweise abgetastet wird. Ein solches Verfahren ermöglicht es beispielsweise, ein dreidimensionales Objekt mittels einer Prozesssteuerung herzustellen, die auf der Grundlage der mithilfe der optischen Erfassung mindestens eines Teilbereichs des Baufelds gewonnenen Ergebnisse durchgeführt wird.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum schichtweisen Herstellen eines dreidimensionalen Objekts gemäß einer ersten Ausführungsform der vorliegenden Erfindung.
- Fig. 2: ist eine schematische, nicht maßstäbliche perspektivische Teilansicht eines Bereichs innerhalb der in Fig. 1 dargestellten Vorrichtung und zeigt unter anderem einen darin enthaltenen Beschichter gemäß der ersten Ausführungsform.
- Fig. 3: ist eine schematische, nicht maßstäbliche perspektivische Teilansicht eines Bereichs innerhalb der in Fig. 1 dargestellten Vorrichtung und zeigt unter anderem einen darin enthaltenen Beschichter gemäß einer zweiten Ausführungsform der vorliegenden Erfindung.
- Fig. 4: ist eine schematische, nicht maßstäbliche perspektivische Teilansicht eines Bereichs innerhalb der in Fig. 1 dargestellten Vorrichtung und zeigt unter anderem einen darin enthaltenen Beschichter gemäß einer dritten Ausführungsform der vorliegenden Erfindung.

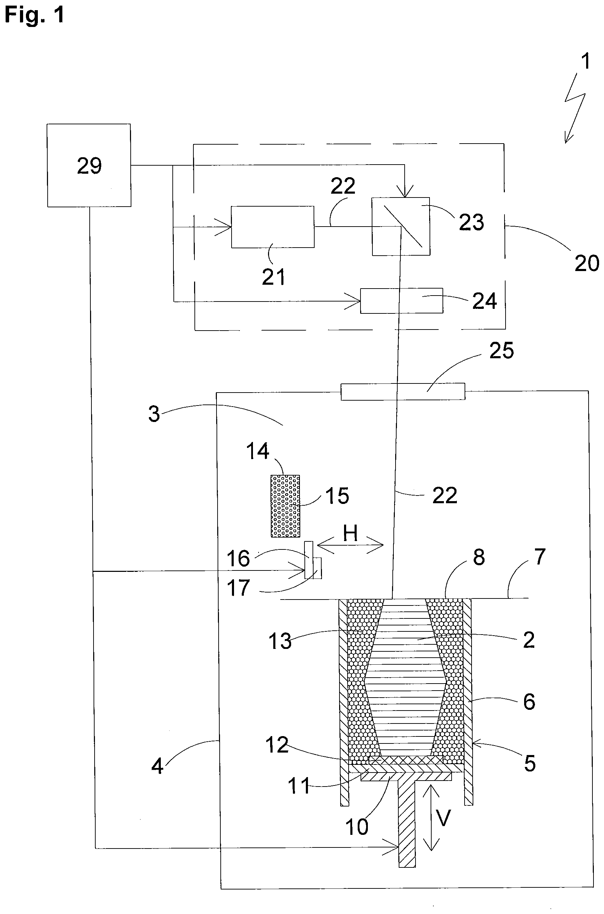

Im Folgenden wird mit Bezug auf Fig. 1 ein Ausführungsbeispiel einer Vorrichtung 1 gemäß einer ersten Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selber aufgebaut werden, die dann als Bauplattform dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 auf das Baufeld 8. In der Prozesskammer ist ferner eine Scanvorrichtung 17 angeordnet, die an dem Beschichter 16 angebracht ist.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in deren Wandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Durch Verfahren des Beschichters 16 über die Arbeitsebene 7 wird dann eine Schicht des pulverförmigen Aufbaumaterials 15 aufgebracht. Das Aufbringen erfolgt zumindest über den gesamten Querschnitt des herzustellenden Objekts 2, vorzugsweise über das gesamte Baufeld 8, also den Bereich der Arbeitsebene 7, der durch eine Vertikalbewegung des Trägers abgesenkt werden kann. Anschließend wird der Querschnitt des herzustellenden Objekts 2 von dem Laserstrahl 22 abgetastet, so dass das pulverförmige Aufbaumaterial 15 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

Beim Verfahren des Beschichters 16 über die Arbeitsebene 7 wird die Scanvorrichtung 17 gemeinsam mit diesem verfahren und scannt dabei die Arbeitsebene 7.

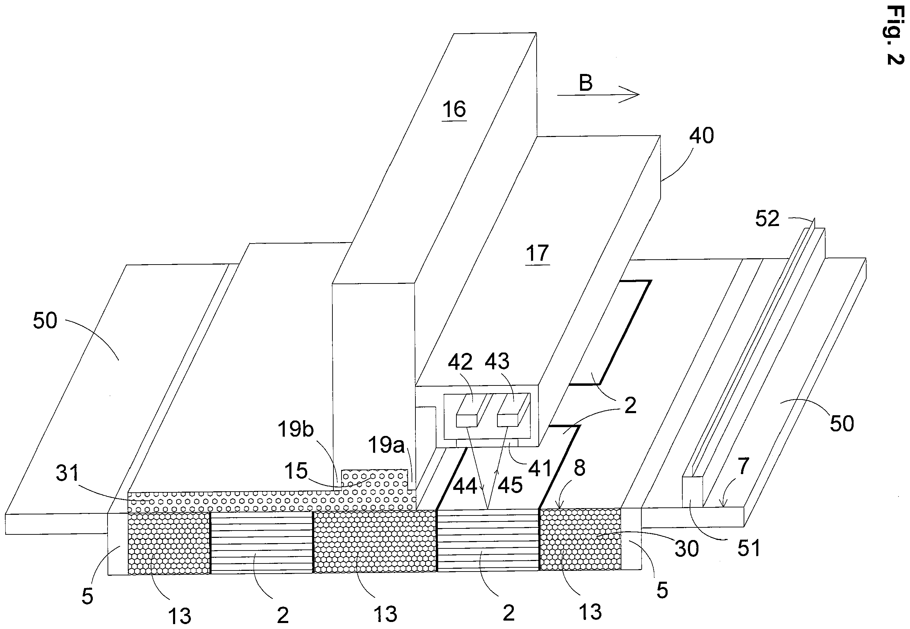

Fig. 2 ist eine schematische, nicht maßstäbliche perspektivische Teilansicht eines Bereichs innerhalb der Prozesskammer 3 der in Fig. 1 dargestellten Vorrichtung 1. Insbesondere zeigt Fig. 2 den Beschichter 16 mit der daran angebrachten Scanvorrichtung 17. Dabei ist die Scanvorrichtung 17 vorzugsweise so an dem Beschichter angebracht, dass zumindest Teile von ihr zu Reinigungs- oder Wartungszwecken oder zum Austausch von dem Beschichter 16 lösbar sind.

In einem durch vorangegangene Prozessschritte aufgebauten Pulverbett 30 ist der verfestigte Teil des herzustellenden Objekts 2 von unverfestigt gebliebenem Pulver 13 umgeben. Auf die zuletzt aufgebrachte und selektiv verfestigte Pulverschicht wird mittels einer Bewegung des Beschichters 16 in einer Beschichtungsrichtung B eine weitere Pulverschicht 31 des Aufbaumaterials 15 aufgetragen.

Der Beschichter enthält eine in der Beschichtungsrichtung B vorne liegenden Klinge (vordere Klinge 19a) und eine in der Beschichtungsrichtung B hinten liegende Klinge (hintere Klinge 19b). Diese beiden Klingen schließen einen Zwischenraum in der Beschichtungsrichtung B und in die Gegenrichtung zur Beschichtungsrichtung zumindest teilweise ab. Dieser durch die beiden Klingen 19a, 19b begrenzte Zwischenraum ist dazu ausgebildet, einen Vorrat an pulverförmigem Aufbaumaterial 15 aufzunehmen. Quer, vorzugsweise senkrecht zu der Beschichtungsrichtung B erstrecken sich die beiden Klingen 19a, 19b und damit auch der von ihnen begrenzte Zwischenraum über die gesamte Breite des zu beschichtenden Bereichs, vorzugsweise über das gesamte Baufeld 8. Durch diese Erstreckung ist der zum Aufbringen des Aufbaumaterials geeignete Bereich des Beschichters definiert.

Beim Verfahren des Beschichters 16 in der Beschichtungsrichtung B verbleibt ein Teil des pulverförmigen Aufbaumaterials 15 auf dem Pulverbett 30 und wird von der hinteren Klinge 19b zu einer gleichmäßigen dünnen Pulverschicht 31 ausgezogen. Die aufgebrachte Pulvermenge wird bestimmt durch den Höhenabstand zwischen der Unterkante der hinteren Klinge 19b und dem Pulverbett 30.

Gemäß der vorliegenden Ausführungsform ist die Scanvorrichtung 17 in der Beschichtungsrichtung B, also der Bewegungsrichtung des Beschichters 16, vor dem Beschichter 16 angeordnet. Die Scanvorrichtung 17 weist ein Gehäuse 40 mit einem nach unten zu dem Pulverbett 30 hin gerichteten lichtdurchlässigen Fenster 41 auf. In dem Gehäuse sind eine langgestreckte Lichtquelle 42 und ein lichtempfindlicher Zeilensensor 43 angeordnet. Die Bezeichnung "Licht" ist im Sinne der vorliegenden Erfindung nicht allein auf das sichtbare Spektrum eingeschränkt, sondern kann auch benachbarte Wellenlängenbereiche wie Infrarot oder Ultraviolett umfassen.

Der Zeilensensor 43 enthält eine Reihe lichtempfindlicher Elemente und kann daher eine räumliche Verteilung der Lichtintensität entlang der Reihe messen. Das Fenster 41, ein Lichtabgabebereich der Lichtquelle 42, d.h. der Bereich der Lichtquelle 42, der zum Abgeben von Licht in der Lage ist, und ein Aufnahmebereich des Zeilensensors 43, d.h. der Bereich des Zeilensensors 43, der zum Erfassen von Licht geeignet ist, erstrecken sich quer, vorzugsweise senkrecht zu der Beschichtungsrichtung B im Wesentlichen entlang des gesamten zum Aufbringen des Aufbaumaterials geeigneten Bereichs des Beschichters 16.

Außerhalb des Baufelds 8 ist in der Arbeitsebene 7 ein Arbeitstisch 50 angebracht. Auf diesem Arbeitstisch 50 ist ein Abstreifer 51 angebracht, der ein Abstreifelement 52 enthält, das vorzugsweise als Abstreiflippe oder Bürste ausgebildet ist. Der Abstreifer 51 ist so angebracht, dass die Scanvorrichtung 17 am Ende der Fahrt des Beschichters 16 über das Baufeld 8 über den Abstreifer 51 gefahren wird. Dabei streift das Abstreifelement 52 eventuelle Verschmutzungen von dem Fenster 41 der Scanvorrichtung 17 ab, so dass der Betrieb der Scanvorrichtung 17 nicht durch die Verschmutzungen beeinträchtigt wird.

Zeilenscanner mit Lichtquelle und Zeilensensor sind aus der Technik bekannt, beispielsweise zum Scannen von Dokumenten in Faxgeräten, Scannern oder Kopierern. Für die vorliegende Anmeldung können alle aus dem Stand der Technik bekannten Komponenten bzw. Verfahren verwendet werden, insbesondere auch in Fig. 2 der Übersichtlichkeit halber nicht gezeigte optische Komponenten zur Bündelung von abgegebenem und empfangenem Licht, soweit sie unter den in der Vorrichtung herrschenden Umgebungsbedingungen einsetzbar sind.

So kann die Lichtquelle 42 als langgestreckte Kaltlichtquelle, beispielsweise in Form einer Leuchtstoffröhre, oder als eine Reihe punktförmiger Lichtquellen wie z.B. Leuchtdioden gebildet sein.

Der Zeilensensor 43 kann beispielsweise einen CCD-Zeilensensor, einen CMOS-Zeilensensor oder eine Reihe einzelner Photodioden enthalten. Er kann auch aus thermischen Empfängerelementen aufgebaut sein wie beispielsweise als Reihe von Bolometern oder pyroelektrischen Sensoren.

Lichtquelle 42 und Zeilensensor 43 können, wie es im Stand der Technik bekannt ist, für einen farbunabhängigen Betrieb, bei dem nur die Lichtintensität ausgewertet wird, und einen Farbbetrieb, bei der auch eine Auswertung der Farbe erfolgt, ausgelegt sein.

Von der Lichtquelle 42 abgegebenes Licht 44 trifft auf das Pulverbett 30, wird von diesem reflektiert und gelangt als reflektiertes Licht 45 auf den Zeilensensor 43, der es in ein elektrisches Signal umwandelt und dieses Signal ausgibt.

Bei stehendem Beschichter 16 erfasst die Scanvorrichtung 17 ein Linienprofil des reflektierten Lichts. Die Ortsauflösung in der Längsrichtung des Zeilensensors 43 ist dabei durch die Länge des Aufnahmebereichs des Zeilensensors 43 und die Anzahl der in ihm enthaltenen Einzelsensoren bestimmt.

Bei fahrendem Beschichter 16 erfasst die Scanvorrichtung 17 aufeinanderfolgend eine Mehrzahl von Linienprofilen des reflektierten Lichts, die jeweils einer zu dem jeweiligen Zeitpunkt abgetasteten Linie auf dem Pulverbett 30 entsprechen. Dadurch kann ein zweidimensionales Bild des Pulverbetts 30 oder zumindest eines Teilbereichs davon erfasst werden. Die Ortsauflösung in der Bewegungsrichtung B des Beschichters 16 ist dabei durch die Geschwindigkeit des Beschichters 16 in der Bewegungsrichtung B und die Wiederholfrequenz der Aufnahme eines Linienprofils bestimmt.

Das von dem Zeilensensor 43 ausgegebene elektrische Bildsignal wird in der Steuereinheit 29 oder einer anderen dafür geeigneten Auswerteeinheit ausgewertet. Dort kann es beispielsweise in eine Bilddatei umgewandelt werden und in einer Speichereinheit abgelegt werden. Parallel zu der Erfassung des Bildes oder nach der Erfassung eines Gesamtbildes kann das Bild weiterverarbeitet und ausgewertet werden.

Die Vorrichtung der vorliegenden Ausführungsform, insbesondere der mit der Scanvorrichtung versehende Beschichter, ist somit in der Lage, während des Verfahrens des Beschichters über das Baufeld ein zweidimensionales Bild zumindest eines Teilbereichs des Baufelds zu erfassen. Da die Vorrichtung mittels eines Verfahrens zur Prozesssteuerung betrieben wird, beinhaltet auch das Verfahren zur Prozesssteuerung gemäß der vorliegenden Ausführungsform das Erfassen zumindest eines Teilbereichs des Baufelds.

In der vorliegenden Ausführungsform ist die Scanvorrichtung 17 in der Beschichtungsrichtung B vor dem Beschichter 16 angeordnet. Somit tastet Scanvorrichtung 17 die bereits selektiv verfestigte vorherige Schicht des Pulverbetts 30 ab. Die dort enthaltenen verfestigten Stellen des Objekts 2 und das unverfestigt gebliebene Pulver 13 haben unterschiedliche Reflektionseigenschaften und können daher auf dem aufgenommenen Bild voneinander unterschieden werden.

So ist es beispielsweise möglich, anhand des aufgenommenen Bildes eine Vermessung der verfestigten Bereiche durchzuführen und diese Ist-Werte mit den vorgegebenen Sollwerten zu vergleichen. Bei einer Abweichung kann steuernd in den Betrieb der Vorrichtung eingegriffen werden, beispielsweise durch Änderungen von Prozesseigenschaften wie z.B. Arbeitstemperatur oder Verfahrgeschwindigkeit und Leistung des Laserstrahls.

Es ist beispielsweise auch möglich, die Oberfläche der verfestigten Bereiche zu vermessen, um Rauigkeiten, Poren, Risse usw. zu erkennen. Auch hier kann bei Bedarf steuernd in den Betrieb der Vorrichtung eingegriffen werden.

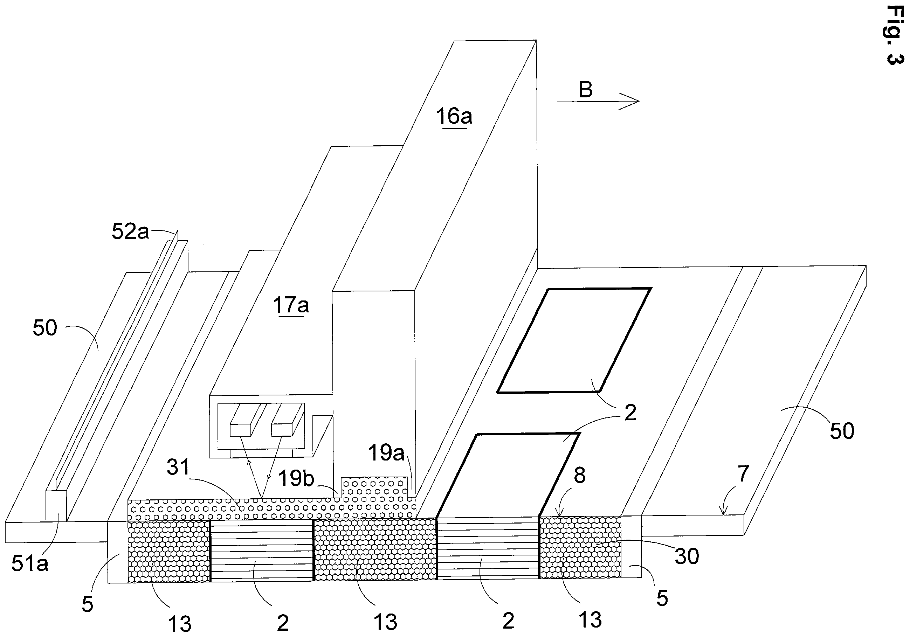

Fig. 3 ist eine schematische, nicht maßstäbliche perspektivische Teilansicht eines Bereichs innerhalb der Prozesskammer 3 der in Fig. 1 dargestellten Vorrichtung 1 und zeigt unter anderem einen Beschichter 16a gemäß einer zweiten Ausführungsform der vorliegenden Erfindung.

Der Beschichter 16a unterscheidet sich von dem in Fig. 2 gezeigten Beschichter 16 lediglich darin, dass eine Scanvorrichtung 17a in der Beschichtungsrichtung B, also der Bewegungsrichtung des Beschichters 16a, hinter dem Beschichter 16a angeordnet ist statt vor ihm. Dementsprechend ist auch ein Abstreifer 51a mit einem Abstreifelement 52a auf der anderen Seite des Baufelds 8 angeordnet als in Fig. 2 gezeigt.

Die Scanvorrichtung 17a ist gegenüber der in Fig. 2 gezeigten Scanvorrichtung 17 spiegelbildlich ausgeführt. Ansonsten ist der Aufbau des Beschichters 16a und der Scanvorrichtung 17a jeweils so wie in der ersten Ausführungsform beschrieben.

Während die Scanvorrichtung 17 der ersten Ausführungsform die bereits selektiv verfestigte vorherige Schicht des Pulverbetts 30 abtastet, tastet die Scanvorrichtung 17a die neu aufgebrachte Pulverschicht 31 ab.

Dadurch ist die vorliegende Ausführungsform beispielsweise in der Lage, Unebenheiten und/oder Fehlstellen in der neu aufgebrachten Schicht 31 zu erfassen. Darauf aufbauend können korrigierende Maßnahmen ergriffen werden, beispielsweise ein erneutes Verfahren des Beschichters über das Baufeld 8, um die Unebenheiten und/oder Fehlstellen auszugleichen.

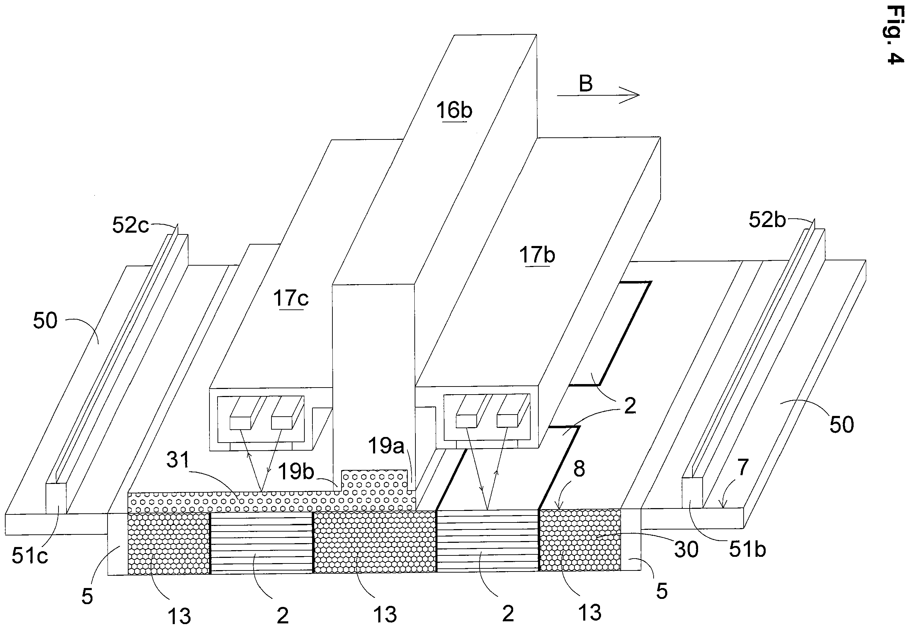

Fig. 4 ist eine schematische, nicht maßstäbliche perspektivische Teilansicht eines Bereichs innerhalb der Prozesskammer 3 der in Fig. 1 dargestellten Vorrichtung 1 und zeigt unter anderem einen Beschichter 16b gemäß einer dritten Ausführungsform der vorliegenden Erfindung.

Die dritte Ausführungsform stellt eine Kombination aus der ersten und der zweiten Ausführungsform dar. Der Beschichter 16b enthält zwei Scanvorrichtungen 17b, 17c, von denen die Scanvorrichtung 17b in der Beschichtungsrichtung B, also der Bewegungsrichtung des Beschichters 16b, vor dem Beschichter 16b angeordnet ist und die Scanvorrichtung 17c hinter dem Beschichter 16b. Dementsprechend ist auch die jeweils ein Abstreifer 51b, 51c mit einem Abstreifelement 52b, 52c auf beiden Seiten des Baufelds 8 angeordnet.

Der Aufbau des Beschichters 16b und der Scanvorrichtungen 17b, 17c ist jeweils so wie in der ersten bzw. der zweiten Ausführungsform beschrieben.

Durch die Kombination der Scanvorrichtungen gemäß der ersten und zweiten Ausführungsform kann auch eine Kombination der Wirkungen erzielt werden, die jeweils mit der ersten und der zweiten Ausführungsform erzielt werden können. Dabei übernimmt die Scanvorrichtung 17b die Funktionen der Scanvorrichtung 17 der ersten Ausführungsform und die Scanvorrichtung 17c diejenigen der Scanvorrichtung 17a der zweiten Ausführungsform.

Vorteilhaft ist diese Ausführungsform vor allem bei einem hin- und herfahrenden Beschichter, bei dem eine Beschichtung sowohl in der in Fig. 4 gezeigten Beschichtungsrichtung B als auch in deren Gegenrichtung erfolgt. Bei einer Fahrt in der Gegenrichtung wird das Pulver durch die Klinge 19a zu einer gleichmäßigen Schicht ausgezogen. Dabei übernimmt die Scanvorrichtung 17c die Funktionen der Scanvorrichtung 17 der ersten Ausführungsform und die Scanvorrichtung 17b diejenigen der Scanvorrichtung 17a der zweiten Ausführungsform.

Neben den in den obigen Ausführungsformen beschriebenen Möglichkeiten, ein von einer an dem Beschichter angebrachten Scanvorrichtung erfasstes Bild des Pulverbetts auszuwerten, bietet die vorliegende Erfindung noch weitere Möglichkeiten, vor allem zum Kalibrieren der Vorrichtung, d.h. zum Ausrichten und Justieren einzelner Komponenten absolut und relativ zueinander.

In einem ersten Beispiel soll die Umlenkvorrichtung für den Laserstrahl kalibriert werden. Dazu wird zunächst eine Musterplatte- oder folie, auf der ein vorbestimmtes Testmuster aufgebracht ist, auf den Träger aufgelegt und von dem Beschichter abgefahren. Die Scanvorrichtung erfasst dabei ein Bild des Testmusters. Aus einem Vergleich mit den bekannten Abmessungen des Testmusters und dem von der Scanvorrichtung aufgenommenen Bild lassen sich erste Korrekturdaten ermitteln, mit denen die Scanvorrichtung kalibriert werden kann. Dadurch können Koordinaten des aufgenommen Bildes (z.B. Zeile, Spalte der Bilddatei) in reale Koordinaten (z.B. mm in einer XY-Ebene) umgerechnet werden.

Anschließend wird anstelle der Musterplatte ein Target auf den Träger aufgelegt. Das Target kann beispielsweise aus einer Metallplatte oder einer Folie gebildet sein oder aus einem Material wie beispielsweise Photopapier, das auf Laserstrahlung reagiert, so dass ein von dem Laserstrahl belichtetes Muster im Target verbleibt. Auf diesem Target werden dann von dem Laserstrahl Referenzmarkierungen aufgebracht. Anstelle eines Targets kann auch eine vorher auf den Träger aufgebrachte Pulverschicht belichtet werden. Danach wird das Target bzw. die Pulverschicht von dem Beschichter abgefahren, wobei die Scanvorrichtung ein Bild der Referenzmarkierungen erfasst.

Aus einem Vergleich der (mittels der ersten Korrekturdaten ermittelten) Istpositionen der Referenzmarkierungen mit ihren durch die Steuereinheit vorgegebenen Sollpositionen lassen sich zweite Korrekturdaten ermitteln, mit denen die Umlenkvorrichtung kalibriert werden kann. Dadurch kann sichergestellt werden, dass im Betrieb die Istpositionen der belichteten Bereiche mit ihren Sollpositionen übereinstimmen.

In einem zweiten Beispiel sollen der Beschichter und der Träger bzw. die darauf angebrachte Bauplattform relativ zueinander ausgerichtet werden. Das setzt voraus, dass der Beschichter und/oder der Träger ausrichtbar in der Vorrichtung angebracht sind.

Dazu wird zunächst eine Musterplatte- oder folie, auf der Referenzmarkierungen aufgebracht sind, auf den Träger aufgelegt und von dem Beschichter abgefahren. Die Scanvorrichtung erfasst dabei ein Bild der Referenzmarkierungen. Das Abfahren mit dem Beschichter und das Erfassen eines Bildes der Referenzmarkierungen wird mehrmals wiederholt, wobei jedes Mal der Träger um einen vorbestimmte Höhe angehoben oder abgesenkt wird.

Aus einem Vergleich der aufgenommenen Bilder miteinander lässt sich bestimmen, welche Referenzmarkierung in welchem Bild am schärfsten abgebildet ist. Aus der Anzahl der Bilder, die zwischen zwei scharfen Abbildungen von zwei Referenzmarkierungen liegen, der vorbestimmte Höhe, um die der Träger bei jedem Schritt angehoben oder abgesenkt wurde, und dem Abstand der Referenzmarkierungen voneinander lässt sich ein Winkel bestimmen, um den die Verbindungslinie zwischen den Referenzmarkierungen gegenüber einer von dem Beschichter abgefahrenen Ebene verkippt ist.

Bei einem rechteckigen Baufeld werden vorzugsweise drei Referenzmarkierungen in drei verschiedenen Ecken detektiert, so dass eine Verkippung in zwei senkrecht zueinander stehenden Richtungen und damit die gesamte räumliche Verkippung zwischen der von dem Beschichter abgefahrenen Ebene und der Oberfläche der Bauplattform bestimmt werden kann.

Durch geeignete Maßnahmen werden dann der Beschichter und/oder der Träger entsprechend nachjustiert. Danach kann der Vorgang wiederholt werden, um zu prüfen, ob die Ausrichtung nun stimmt, oder um sie gegebenenfalls weiter anzupassen.

In einem dritten Beispiel soll eine Ebenheit des Träger bzw. der darauf angebrachte Bauplattform bestimmt werden.

Dazu wird zunächst eine Musterfolie, die sich dem Oberflächenprofil der Bauplattform angleicht und auf der Referenzmarkierungen aufgebracht sind, auf die Bauplattform aufgelegt und von dem Beschichter abgefahren. Die Scanvorrichtung erfasst dabei ein Bild der Referenzmarkierungen. Das Abfahren mit dem Beschichter und das Erfassen eines Bildes der Referenzmarkierungen wird mehrmals wiederholt, wobei jedes Mal der Träger um einen vorbestimmte Höhe angehoben oder abgesenkt wird.

Aus einem Vergleich der aufgenommenen Bilder miteinander lässt sich bestimmen, welche Referenzmarkierung in welchem Bild am schärfsten abgebildet ist. Daraus und aus der Position der jeweiligen Referenzmarkierung lässt sich ähnlich wie bei dem vorangehenden Beispiel ein Höhenprofil der Bauplattform ermitteln. Dazu wird vorzugsweise ein Testmuster mit mehreren über die gesamte Bauplattform verteilten Referenzmarkierungen verwendet.

Überschreitet das ermittelte Höhenprofil einen vorgeschriebenen Grenzwert, kann beispielsweise die Bauplattform gegen eine andere ausgetauscht werden. Alternativ kann das ermittelte Höhenprofil aber auch dazu verwendet werden, steuernd in den Betrieb der Vorrichtung eingegriffen werden, beispielsweise durch Änderungen von Prozesseigenschaften wie z.B. Arbeitstemperatur oder Verfahrgeschwindigkeit und Leistung des Laserstrahls, um die durch das Höhenprofil der Bauplattform bewirkten lokalen Dickeunterschiede der ersten, direkt auf die Bauplattform aufgetragenen Pulverschicht zu berücksichtigen.

Statt dem Auflegen eines Testmusters können die Referenzmarkierung auch durch den Laser auf ein Target belichtet werden. Alternativ kann auch direkt die Bauplattform durch den Laser belichtet werden. Dadurch können Messfehler, die durch mangelndes Anliegen der Musterfolie oder des Targets an der Bauplattform verursacht werden, vermieden werden.

Während die Scanvorrichtungen in den obigen Ausführungsformen an dem Beschichter angebracht sind, können sie auch getrennt von dem Beschichter bereitgestellt sein und gemeinsam mit diesem oder getrennt von diesem über die Arbeitsebene verfahrbar sein.

Eine statische Scaneinheit mit einem Zeilensensor, also einem eindimensionalen Array aus Detektorelementen, ermöglicht nur eine Ermittlung der Raumkoordinaten eines Punkts bzw. einer Reihe von Punkten entlang einer Erstreckung des Zeilensensors. Um das gesamte Baufeld scannen zu können, müsste eine statische Scaneinheit einen verschwenkbaren Zeilensensor oder eine Kamera mit einer geeigneten x/y-Auflösung aufweisen. Demgegenüber kann der Scanner gemäß der vorliegenden Erfindung, der einen Zeilensensor enthält und über das Baufeld bewegbar angeordnet ist, beispielsweise mit einem einfachen Aufbau eine 3D-Information der gesamten Oberfläche des Baufelds liefern. Besonders vorteilhaft ist ein solcher über das Baufeld bewegbarer Scanner dadurch zu realisieren, dass die Scaneinheit an einem über das Baufeld fahrenden Beschichter angeordnet ist, unabhängig davon, ob er in der Bewegungsrichtung des Beschichters vor oder hinter dem Beschichter angeordnet ist oder ob auf beiden Seiten des Beschichters je eine Scaneinheit angeordnet ist.

Eine Scaneinheit, die am Beschichter angebracht ist, und zwar in Bewegungsrichtung vor dem Beschichter, kann beispielweise ein Relief einer selektiv verfestigten Pulverschicht inklusive Lokalisierung von Höhen und Senken ausgehend von einem Normniveau vermessen. Dabei geht es darum, einen Zustand nach einer Verfestigung des Aufbaumaterials zu erfassen. Der Beschichter ist dabei vorzugsweise so gebildet, dass er das Aufbaumaterial unselektiv aufbringt, nicht nur auf die dem Querschnitt des herzustellenden Objekts entsprechenden Stellen. Vorzugsweise bringt er das Aufbaumaterial über den gesamten Bereich des herzustellenden Objekts auf, in weiter bevorzugter Weise über das gesamte Baufeld. Wenn das Verfestigen des Aufbaumaterials mittels einer Lichtquelle durchgeführt wird, die ebenfalls über das Baufeld verfahren wird, ist es auch möglich, die Scaneinheit in Bewegungsrichtung dahinter anzubringen. Beispielsweise können in einer kombinierten über das Baufeld bewegbaren Vorrichtung in Bewegungsrichtung vorne ein Beschichter, dahinter ein Belichter und weiter dahinter die genannte Scaneinheit angeordnet sein.

Eine Scaneinheit, die am Beschichter angebracht ist, hat auch den Vorteil, dass sie näher am Baufeld und damit an der Oberfläche einer zu überwachenden Schicht angeordnet ist als ein Scanner, der das gesamte Baufeld überwacht. Dadurch ergibt sich beispielsweise eine erhöhte Präzision und Zuverlässigkeit der Erfassung durch Vermeiden eines Scannens durch eine Wolke von Schmauch/Spratzern/Kondensat, die in der Prozesskammer über dem Baufeld wabert. Dieser besonders beim Schmelzen/Sintern von Metallpulver mittels Laser- bzw. Elektronenstrahl häufig auftretende Effekt ist ein Problem, das durch die vorliegende Erfindung gelöst wird, während sich dieses Problem beim Schmelzen/Sintern von Kunststoffpulver, in der Stereolithographie, beim Fused Deposition Modeling oder anderen Verfahren des 3D-Drucks in dieser Form nicht stellt.

Ein weiterer Vorteil ist beispielsweise, dass es nicht zu Abschattungen im Erfassungsbereich eines beispielsweise von zentraler Position über dem Baufeld aus das gesamte Baufeld erfassenden Scanners durch das Beschichtergehäuse kommt. Weiter kommt es beispielsweise nicht zu einem variablen bzw. ungünstigen Erfassungswinkel eines derartigen Scanners auf dem Baufeld, die zu einer eingeschränkten Ergebnisqualität der Messungen führen können. Eine Montage der Scaneinheit(en) am Beschichter spart einen eigenen Antrieb ein sowie eine Abstimmung der Bewegung der Scaneinheit beispielsweise mit einer Steuereinheit eines Beschichterantriebs.

Ein Vorteil der Anordnung einer Scaneinheit in Bewegungsrichtung hinter dem Beschichter liegt beispielsweise in der Ermittlung einer Qualität der Beschichtung in Bezug auf Abweichungen eines tatsächlichen Höhenniveaus einer aufgetragenen Schicht von einem Soll-Niveau, und zwar in potenziell feiner Auflösung und bezogen auf Senken und Aufwölbungen. Das ermöglicht gegebenenfalls eine Nachdosierung von Pulver im Falle von zu geringem Auftrag, wobei das nachzudosierende Pulvervolumen über einen Soll-Ist-Abgleich präzise berechnet werden kann, und wobei die Lokalisierung der Position/Erstreckung einer Senke beispielsweise auch ein selektives Nachdosieren erlaubt. Des Weiteren wird eine rasche Identifizierung eines Defekts der Abziehklinge des Beschichters im Falle eines höheren Niveaus, als es die Klinge eigentlich zulässt, ermöglicht.

Ein Vorteil der Anordnung eines Scanners in Bewegungsrichtung vor dem Beschichter liegt beispielsweise in der Ermittlung einer Qualität eines Bauvorgangs in Bezug auf Abweichungen eines tatsächlichen Höhenniveaus einer verfestigten Schicht von einem Soll-Niveau, und zwar in potenziell feiner Auflösung und bezogen auf Senken und hervorstehende Spitzen/Kanten. Das ermöglicht im Falle erhöhter Materialschrumpfung (z. B. durch zu hohen Energieeintrag durch einen Laser) eine kompensierende erhöhte Dosierung von Pulver beim nächsten Schichtauftrag und/oder eine Anpassung von Prozessparametern, insbesondere Belichtungsparametern. Dabei kann das zusätzlich zu dosierende Pulvervolumen über einen Soll-Ist-Abgleich präzise berechnet werden. Im Falle der Detektion einer Überhöhung eines verfestigten Bereichs (z. B. durch den Curling-Effekt beim Schmelzen/Sintern von Metallpulver) kann z. B. ein Bauvorgang rechtzeitig abgebrochen werden, um eine Beschädigung des Beschichters oder unerwünschte Effekte (z. B. Vibrationen) durch eine Kollision einer Beschichterklinge mit der überhöhten Teilfläche des verfestigten Bereichs zu vermeiden.

Ein Vorteil der Variante jeweils einer Scaneinheit in Bewegungsrichtung vor und hinter dem Beschichter liegt beispielsweise darin, dass die in Bewegungsrichtung vor dem Beschichter angeordnete Scaneinheit ein Abtasten der Oberfläche einer bereits verfestigten Schicht übernimmt und die in Bewegungsrichtung hinter dem Beschichter angeordnete Scaneinheit ein Abtasten eines Schichtauftrags übernimmt. Die Vorteile treten insbesondere bei einer Beschichtung in zwei gegenläufige Richtungen (Hin- und Her-Bewegung) zu Tage. Dann übernehmen die beiden Scaneinheiten abhängig von der jeweiligen Bewegungsrichtung abwechselnd die Abtastung einer verfestigten (Bauteil) und einer unverfestigten (Pulverbett) Oberfläche.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser) umfassen, insbesondere eine Zeile aus diesen Lasern. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den dem Objektquerschnitt entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das Herstellen eines Objekts mittels schichtweisen Auftragens und selektiven Verfestigens eines Aufbaumaterials unabhängig von der Art und Weise, in der das Aufbaumaterial verfestigt wird.

Es können verschiedene Arten von Aufbaumaterialien verwendet werden, insbesondere Pulver wie z.B. Metallpulver, Kunststoffpulver, Keramikpulver, Sand, gefüllte oder gemischte Pulver. Dabei kann das Aufbaumaterial ein Pulver enthalten oder ausschließlich aus Pulver gebildet sein.

## Patentansprüche

1. Beschichter (16) zum Auftragen eines Aufbaumaterials (15) in einer Vorrichtung (1) zum Herstellen eines dreidimensionalen Objekts (2) innerhalb eines Baufelds (8) durch Verfestigen von Schichten des Aufbaumaterials (15) an den dem jeweiligen Querschnitt des Objekts (2) entsprechenden Stellen,
wobei der Beschichter (16) geeignet ist, eine Aufbaumaterialschicht (31) durch eine Bewegung über das Baufeld (8) in einer Bewegungsrichtung (B) aufzutragen und
wobei der Beschichter (16) eine erste Scanvorrichtung (17), die einen ersten Zeilensensor (43) enthält, zur Erfassung mindestens eines Teilbereichs des Baufelds (8) aufweist,
**dadurch gekennzeichnet, dass**
die erste Scanvorrichtung (17) eine Lichtquelle (42) enthält, die sich vorzugsweise entlang eines gesamten Aufnahmebereichs des ersten Zeilensensors (43) erstreckt,
wobei die Lichtquelle (42) vorzugsweise durch eine längliche Lichtquelle oder durch eine Reihe punktförmiger Lichtquellen gebildet ist.

2. Beschichter (16; 16a) nach Anspruch 1, wobei die erste Scanvorrichtung (17; 17a) in der Bewegungsrichtung (B) des Beschichters (16; 16a) vor oder hinter dem Beschichter (16; 16a) angeordnet ist.

3. Beschichter (16b) nach einem der Ansprüche 1 bis 2, wobei der Beschichter (16b) weiter eine zweite Scanvorrichtung (17c), die einen zweiten Zeilensensor enthält, zur Erfassung mindestens eines Teilbereichs des Baufelds (8) aufweist,
wobei die zweite Scanvorrichtung (17c) vorzugsweise in der Bewegungsrichtung (B) des Beschichters (16b) auf der anderen Seite des Beschichters (16b) angeordnet ist als die erste Scanvorrichtung (17c).

4. Beschichter (16b) nach Anspruch 3, wobei die zweite Scanvorrichtung (17c) eine Lichtquelle (42) enthält, die sich vorzugsweise entlang eines gesamten Aufnahmebereichs des zweiten Zeilensensors erstreckt,
wobei die Lichtquelle (42) vorzugsweise durch eine längliche Lichtquelle oder durch eine Reihe punktförmiger Lichtquellen gebildet ist

5. Beschichter (16) nach einem der Ansprüche 1 bis 4, wobei
die Längsausdehnung des ersten und/oder zweiten Zeilensensors (43) quer, insbesondere senkrecht, zur Bewegungsrichtung (B) des Beschichters (16) für den Materialauftrag ist und
ein Aufnahmebereich des ersten und/oder zweiten Zeilensensors (43) sich vorzugsweise im Wesentlichen entlang des gesamten zum Aufbringen des Aufbaumaterials geeigneten Bereichs des Beschichters (16) erstreckt.

6. Beschichter (16) nach einem der Ansprüche 1 bis 5, wobei der erste und/oder zweite Zeilensensor (43) einen CCD-Zeilensensor, einen CMOS-Zeilensensor oder eine Zeile aus Photodioden, Bolometern oder pyroelektrischen Sensoren aufweist.

7. Beschichter (16) nach einem der Ansprüche 1 bis 6, wobei die erste und/oder zweite Scanvorrichtung (17) zumindest in Teilen lösbar an dem Beschichter (16) angebracht ist.

8. Vorrichtung (1) zum Herstellen eines dreidimensionalen Objekts (2) innerhalb eines Baufelds (8) durch Verfestigen von Schichten eines Aufbaumaterials (15) an den dem jeweiligen Querschnitt des Objekts (2) entsprechenden Stellen mit einem über das Baufeld (8) verfahrbaren Beschichter (16) nach einem der vorhergehenden Ansprüche.

9. Vorrichtung nach Anspruch 8, wobei die Scanvorrichtung (17) an dem Beschichter (16) angebracht ist, vorzugsweise zumindest in Teilen lösbar an dem Beschichter (16) angebracht ist und/oder
wobei die Vorrichtung einen außerhalb des Baufelds (8) angebrachten Abstreifer (51), vorzugsweise mit einer Abstreiflippe (52) oder einer Bürste enthält zum Abstreifen eines optischen Fensters (41) der Scanvorrichtung.

10. Verfahren zur Prozesssteuerung in einer Vorrichtung (1) gemäß einem der Ansprüche 8 bis 9,
wobei mindestens ein Teilbereich des Baufelds (8) mittels der Scanvorrichtung (17), die den Zeilensensor (43) enthält, erfasst wird.

11. Verfahren nach Anspruch 10, bei dem ausgehend von dem von der Scanvorrichtung (17) erfassten Bild mindestens des Teilbereichs des Baufelds (8):
Unebenheiten und/oder Fehlstellen in der neu aufgebrachten Schicht (31) erfasst werden und/oder
Abmessungen und/oder Oberflächenbeschaffenheit der verfestigten Bereiche (2) der bereits selektiv verfestigten Schicht (30) erfasst werden.

12. Verfahren nach Anspruch 10 oder 11, bei dem
eine Vorrichtung (1) verwendet wird, die eine Belichtungseinheit (20) enthält, die in der Lage ist, eine zum Verfestigen des Aufbaumaterials geeignete Wellen- oder Teilchenstrahlung (22) auszusenden,
wobei die Prozesssteuerung eine Kalibrierung der Belichtungseinheit (20) mit folgenden Schritten umfasst:
Bewegen der Scanvorrichtung (17) über ein Testmuster mit vorbestimmten Abmessungen und Aufnehmen eines Bildes des Testmusters,
Vergleichen des aufgenommenen Bildes mit den vorbestimmten Abmessungen des Testmusters und Bestimmen erster Korrekturdaten zum Kalibrieren der Scanvorrichtung,
Belichten von Referenzmarkierungen mit vorbestimmten Sollpositionen mittels der Belichtungsvorrichtung (20) auf ein lichtempfindliches Target oder eine aufgebrachten Schicht (31) des Aufbaumaterials (15),
Bewegen der Scanvorrichtung (17) über das belichtete Target oder die belichtete Schicht (30) und Aufnehmen eines Bildes der Referenzmarkierungen,
Vergleichen der mittels der ersten Korrekturdaten aus dem aufgenommenen Bild ermittelten Istpositionen der Referenzmarkierungen mit ihren Sollpositionen und Bestimmen zweiter Korrekturdaten zum Kalibrieren der Belichtungsvorrichtung (20).

13. Verfahren nach einem der Ansprüche 10 bis 12, bei dem
eine Vorrichtung (1) verwendet wird, die einen höhenverstellbaren Träger (10, 11) enthält, der eine Bauplattform (12) trägt, auf der das Objekt (2) aufgebaut werden soll, oder selber als Bauplattform dient,
wobei die Prozesssteuerung eine Bestimmung der Ausrichtung der Scanvorrichtung (17) relativ zu dem Träger (10, 11) oder der Bauplattform (12) mit folgenden Schritten umfasst:
Auflegen eines Testmusters mit Referenzmarkierungen auf den Träger (10,11) oder die Bauplattform (12),
wiederholtes Bewegen der Scanvorrichtung (17) über das Testmuster und Aufnehmen eines Bildes des Testmusters, wobei bei jeder Wiederholung der Träger (10, 11) um einen vorbestimmte Höhe angehoben oder abgesenkt wird,
Bestimmen, welche Referenzmarkierung in welchem Bild am schärfsten abgebildet ist, und
Bestimmen eines Winkels für zumindest zwei Referenzmarkierungen, um den eine Verbindungslinie zwischen den Referenzmarkierungen gegenüber einer von der Scanvorrichtung (17) abgefahrenen Ebene verkippt ist, aus der Anzahl von Bildern, die zwischen den Bildern liegen, in denen die Referenzmarkierungen am schärfsten abgebildet sind, und dem Abstand der Referenzmarkierungen voneinander.

14. Verfahren nach einem der Ansprüche 10 bis 13, bei dem
eine Vorrichtung (1) verwendet wird, die einen höhenverstellbaren Träger (10, 11) enthält, der eine Bauplattform (12) trägt, auf der das Objekt (2) aufgebaut werden soll, oder selber als Bauplattform dient,
wobei die Prozesssteuerung eine Bestimmung der Ebenheit des Trägers (10, 11) oder der Bauplattform (12) mit folgenden Schritten umfasst:
Auflegen eines Testmuster mit Referenzmarkierungen auf den Träger (10, 11) oder die Bauplattform (12) oder Belichten der Referenzmarkierungen direkt auf den Träger (10, 11) oder die Bauplattform (12),
wiederholtes Bewegen der Scanvorrichtung (17) über die Referenzmarkierungen und Aufnehmen eines Bildes der Referenzmarkierungen, wobei bei jeder Wiederholung der Träger (10, 11) um einen vorbestimmte Höhe angehoben oder abgesenkt wird,
Bestimmen, welche Referenzmarkierung in welchem Bild am schärfsten abgebildet ist, und
Bestimmen eines Höhenprofils des Trägers (10, 11) oder der Bauplattform (12) aus den Bildern, in denen die Referenzmarkierungen am schärfsten abgebildet sind, und den Positionen der jeweiligen Referenzmarkierungen.

15. Verfahren zum Herstellen eines dreidimensionalen Objekts (2) unter Verwendung eines Prozesssteuerungsverfahrens nach einem der Ansprüche 10 bis 14, mit den Schritten:
Auftragen einer Schicht (31) eines pulverförmigen Materials (15) mit einem Beschichter (16) durch Bewegen des Beschichters über ein Baufeld (8);
Verfestigen der Schicht (31) an den einem Querschnitt des Objekts (2) entsprechenden Stellen; und
Wiederholen der Schritte des Auftragens und des Verfestigens, bis das dreidimensionale Objekt (3) fertiggestellt ist,
wobei im Rahmen des Prozesssteuerungsverfahrens das Baufeld (8) während eines Schichtauftrags durch die Scanvorrichtung (17) zumindest teilweise abgetastet wird.

## Claims

1. A recoater (16) for applying a building material (15) in a device (1) for manufacturing a three-dimensional object (2) within a build area (8) by solidifying layers of the building material (15) at the points corresponding to the respective cross-section of the object (2),
wherein the recoater (16) is suitable for applying a building material layer (31) by moving across the build area (8) in a movement direction (B) and
wherein the recoater (16) comprises a first scanning device (17) including a first line sensor (43), for capturing at least a subarea of the build area (8), **characterized in that**
the first scanning device (17) includes a light source (42) which preferably extends along a total recording area of the first line sensor (43),
wherein the light source (42) is preferably formed by an elongated light source or by an array of point-shaped light sources.

2. The recoater (16; 16a) according to claim 1, wherein the first scanning device (17; 17a) is arranged in front of or behind the recoater (16; 16a) in the movement direction (B) of the recoater (16; 16a).

3. The recoater (16b) according to one of claims 1 to 2, wherein the recoater (16b) further comprises a second scanning device (17c) including a second line sensor, for capturing at least a subarea of the build area (8),
wherein the second scanning device (17c) is preferably arranged on the other side of the recoater (16b) in the movement direction (B) of the recoater (16b) than the first scanning device (17c).

4. The recoater (16) according to claim 3, wherein the second scanning device (17c) includes a light source (42) which preferably extends along a total recording area of the second line sensor,
wherein the light source (42) is preferably formed by an elongated light source or by an array of point-shaped light sources.

5. The recoater (16) according to one of claims 1 to 4, wherein
the longitudinal extension of the first and/or second line sensor (43) is transverse, in particular perpendicular, to the movement direction (B) of the recoater (16) for the material application and
a recording area of the first and/or second line sensor (43) preferably extends substantially along the total area of the recoater (16) suitable for the application of the building material.

6. The recoater (16) according to one of claims 1 to 5, wherein the first and/or second line sensor (43) comprises a CCD line sensor, a CMOS line sensor, or a line of photodiodes, bolometers, or pyroelectric sensors.

7. The recoater (16) according to one of claims 1 to 6, wherein the first and/or second scanning device (17) is at least in parts detachably mounted at the recoater (16).

8. A device (1) for manufacturing a three-dimensional object (2) within a build area (8) by solidifying layers of a building material (15) at the points corresponding to the respective cross-section of the object (2), comprising:
a recoater (16) according to one of the preceding claims, which recoater is movable across the build area (8).

9. The device according to claim 8, wherein the scanning device (17) is mounted at the recoater (16), is preferably at least in parts detachably mounted at the recoater (16), and/or
wherein the device includes a wiper (51) mounted outside the build area (8) and preferably having a wiping lip (52) or a brush, for wiping an optical window (41) of the scanning device.

10. A method of process control in a device (1) according to one of claims 8 to 9,
wherein at least a subarea of the build area (8) is captured by means of the scanning device (17) including the line sensor (43).

11. The method according to claim 10, in which, based on the image of at least the subarea of the build area (8) captured by the scanning device (17):
unevenness and/or defects in the newly applied layer (31) are captured and/or
dimensions and/or surface finish of the solidified regions (2) of the layer (30) already selectively solidified are captured.

12. The method according to claim 10 or 11, in which
a device (1) is used including an irradiation unit (20) capable of emitting a wave or particle radiation (22) suitable for solidifying the building material,
wherein the process control includes a calibration of the irradiation unit (20) comprising the following steps:
moving the scanning device (17) across a test pattern having predetermined dimensions and recording an image of the test pattern,
comparing the recorded image with the predetermined dimensions of the test pattern and determining first correction data for calibrating the scanning device,
irradiating reference marks having predetermined desired positions by means of the irradiation device (20) on a light-sensitive target or an applied layer (31) of the building material (15),
moving the scanning device (17) across the irradiated target or the irradiated layer (30) and recording an image of the reference marks,
comparing the actual positions of the reference marks determined by means of the first correction data from the recorded image with their desired positions and determining second correction data for calibrating the irradiation device (20).

13. The method according to one of claims 10 to 12, in which
a device (1) is used including a vertically adjustable support (10, 11) carrying a building platform (12) on which the object (2) is to be built up or serving itself as a building platform,
wherein the process control includes a determination of the alignment of the scanning device (17) relatively to the support (10, 11) or the building platform (12) comprising the following steps:
applying a test pattern having reference marks to the support (10, 11) or the building platform (12),
repeatedly moving the scanning device (17) across the test pattern and recording an image of the test pattern, wherein the support (10, 11) is lifted or lowered by a predetermined height at each repetition,
determining which reference mark in which image is reproduced most sharply, and
determining for at least two reference marks an angle at which a connecting line between the reference marks is tilted with respect to a plane covered by the movement of the scanning device (17), from the number of images lying between the images in which the reference marks are reproduced most sharply and the distance of the reference marks from each other.

14. The method according to one of claims 10 to 13, in which
a device (1) is used including a vertically adjustable support (10, 11) carrying a building platform (12) on which the object (2) is to be built up or serving itself as a building platform,
wherein the process control includes a determination of the evenness of the support (10, 11) or of the building platform (12) comprising the following steps:
applying a test pattern having reference marks to the support (10, 11) or the building platform (12) or irradiating the reference marks directly on the support (10, 11) or the building platform (12),
repeatedly moving the scanning device (17) across the reference marks and recording an image of the reference marks, wherein the support (10, 11) is lifted or lowered by a predetermined height at each repetition,
determining which reference mark in which image is reproduced most sharply, and
determining an elevation profile of the support (10, 11) or the building platform (12) from the images in which the reference marks are reproduced most sharply and the positions of the respective reference marks.

15. A method of manufacturing a three-dimensional object (2) using a process control method according to one of claims 10 to 14, the method comprising the steps of:
applying a layer (31) of a material (15) in powder form using a recoater (16) by moving the recoater across a build area (8);
solidifying the layer (31) at the points corresponding to a cross-section of the object (2); and
repeating the steps of applying and solidifying until the three-dimensional object (3) is completed,
wherein in the course of the process control method the build area (8) is at least partially scanned by the scanning device (17) during a layer application.

## Revendications

1. Dispositif de revêtement (16) destiné à appliquer un matériau de construction (15) dans un dispositif (1) destiné à fabriquer un objet tridimensionnel (2) à l'intérieur d'un champ de construction (8) par solidification de couches du matériau de construction (15) aux endroits correspondant à la section transversale respective de l'objet (2),
dans lequel le dispositif de revêtement (16) est adapté à appliquer une couche de matériau de construction (31) par un mouvement au-dessus du champ de construction (8) dans une direction de mouvement (B) et
dans lequel le dispositif de revêtement (16) contient un premier dispositif de balayage (17), qui contient un premier capteur linéaire (43), destiné à acquérir au moins une zone partielle du champ de construction (8),
**caractérisé en ce que**
le premier dispositif de balayage (17) contient une source de lumière (42), qui s'étend de préférence le long de toute une zone d'enregistrement globale du premier capteur linéaire (43),
dans lequel la source de lumière (42) est formée de préférence par une source de lumière allongée ou par une série de sources de lumière en forme de point.

2. Dispositif de revêtement (16; 16a) selon la revendication 1, dans lequel le premier dispositif de balayage (17 ; 17a) est disposé devant ou derrière le dispositif de revêtement (16 ; 16a) dans la direction de mouvement (B) du dispositif de revêtement (16 ; 16a).

3. Dispositif de revêtement (16b) selon l'une quelconque des revendications 1 à 2, dans lequel le dispositif de revêtement (16b) contient en outre un deuxième dispositif de balayage (17c), qui contient un deuxième capteur linéaire, destiné à acquérir au moins une zone partielle du champ de construction (8),
dans lequel le deuxième dispositif de balayage (17c) est disposé de préférence dans la direction de mouvement (B) du dispositif de revêtement (16b) sur l'autre face du dispositif de revêtement (16b) que le premier dispositif de balayage (17c).

4. Dispositif de revêtement (16b) selon la revendication 3, dans lequel le deuxième dispositif de balayage (17c) contient une source de lumière (42), qui s'étend de préférence le long de toute une zone d'enregistrement du deuxième capteur linéaire,
dans lequel la source de lumière (42) est formée de préférence par une source de lumière allongée ou par une série de sources de lumière en forme de points.

5. Dispositif de revêtement (16) selon l'une quelconque des revendications 1 à 4, dans lequel
l'étendue longitudinale du premier et/ou deuxième capteur linéaire (43) est transversale, en particulier perpendiculaire, à la direction de mouvement (B) du dispositif de revêtement (16) pour l'application de matériau et
une zone d'acquisition du premier et/ou deuxième capteur linéaire (43) s'étend de préférence sensiblement le long de toute la zone du dispositif de revêtement (16) adaptée à l'application du matériau de construction.

6. Dispositif de revêtement (16) selon l'une quelconque des revendications 1 à 5, dans lequel le premier et/ou deuxième capteur linéaire (43) présente un capteur linéaire CCD, un capteur linéaire CMOS ou une ligne de photodiodes, de bolomètres ou de capteurs pyroélectriques.

7. Dispositif de revêtement (16) selon l'une quelconque des revendications 1 à 6, dans lequel le premier et/ou deuxième dispositif de balayage (17) est monté au moins en partie de manière détachable sur le dispositif de revêtement (16).

8. Dispositif (1) pour fabriquer un objet (2) tridimensionnel à l'intérieur d'un champ de construction (8) par solidification de couches d'un matériau de construction (15) aux endroits correspondant à la section transversale respective de l'objet (2) avec un dispositif de revêtement (16) selon l'une quelconque des revendications précédentes pouvant être déplacé au-dessus du champ de construction (8).

9. Dispositif selon la revendication 8, dans lequel le dispositif de balayage (17) est monté sur le dispositif de revêtement (16), de préférence est monté au moins en partie de manière détachable sur le dispositif de revêtement (16) et/ou
dans lequel le dispositif contient un racleur (51) monté à l'extérieur du champ de construction (8), de préférence avec une lèvre de raclage (52) ou une brosse pour racler une fenêtre optique (41) du dispositif de balayage.

10. Procédé pour la commande de processus dans un dispositif (1) selon l'une quelconque des revendications 8 à 9,
dans lequel au moins une zone partielle du champ de construction (8) est acquise au moyen du dispositif de balayage (17), qui contient le capteur linéaire (43).

11. Procédé selon la revendication 10, où, à partir de l'image d'au moins la zone partielle du champ de construction (8) acquise par le dispositif de balayage (17) :
des inégalités et/ou défauts sont acquis dans la couche (31) nouvellement appliquée et/ou
des dimensions et/ou la nature de surface des zones (2) solidifiées de la couche (30) déjà solidifiée de manière sélective sont acquises.

12. Procédé selon la revendication 10 ou 11, où
un dispositif (1) est utilisé, qui contient une unité d'exposition (20), qui est en mesure d'émettre un rayonnement d'ondes ou de particules (22) adapté à la solidification du matériau de construction,
dans lequel la commande de processus comprend un étalonnage de l'unité d'exposition (20) avec les étapes suivantes :
le déplacement du dispositif de balayage (17) au-dessus d'un échantillon d'essai avec des dimensions prédéfinies et l'enregistrement d'une image de l'échantillon d'essai,
la comparaison de l'image enregistrée aux dimensions prédéfinies de l'échantillon d'essai et la détermination de premières données de correction pour l'étalonnage du dispositif de balayage,
l'exposition de marquages de référence à des positions théoriques prédéfinies au moyen du dispositif d'exposition (20) sur une cible photosensible ou une couche (31) appliquée du matériau de construction (15),
le déplacement du dispositif de balayage (17) au-dessus de la cible exposée ou de la couche (30) exposée et l'enregistrement d'une image des marquages de référence,
la comparaison des positions réelles des marquages de référence déterminées au moyen des premières données de correction à partir de l'image enregistrée à leurs positions théoriques et la détermination de deuxièmes données de correction pour l'étalonnage du dispositif d'exposition (20).

13. Procédé selon l'une quelconque des revendications 10 à 12, où
un dispositif (1) est utilisé, qui contient un support (10, 11) réglable en hauteur, qui porte une plateforme de construction (12) sur laquelle l'objet (2) vise à être construit, ou sert lui-même de plateforme de construction,
dans lequel la commande de processus comprend une détermination de l'orientation du dispositif de balayage (17) par rapport au support (10, 11) ou à la plateforme de construction (12) avec les étapes suivantes :
la pose d'un échantillon d'essai avec des marquages de référence sur le support (10, 11) ou la plateforme de construction (12),
le déplacement répété du dispositif de balayage (17) au-dessus de l'échantillon d'essai et l'enregistrement d'une image de l'échantillon d'essai, dans lequel, à chaque répétition, le support (10, 11) est soulevé ou abaissé d'une hauteur prédéfinie,
le fait de déterminer quel marquage de référence est reproduit de la manière la plus nette dans quelle image, et
la détermination d'un angle pour au moins deux marquages de référence, selon lequel une ligne de liaison entre les marquages de référence est inclinée par rapport à un plan parcouru par le dispositif de balayage (17), à partir du nombre d'images qui se situent entre les images dans lesquelles les marquages de référence sont reproduits de la manière la plus nette, et de l'écart des marquages de référence les uns par rapport aux autres.

14. Procédé selon l'une quelconque des revendications 10 à 13, où
un dispositif (1) est utilisé, qui contient un support (10, 11) réglable en hauteur, qui porte une plateforme de construction (12) sur laquelle l'objet (2) vise à être construit, ou sert lui-même de plateforme de construction,
dans lequel la commande de processus comprend une détermination de l'uniformité du support (10, 11) ou de la plateforme de construction (12) avec les étapes suivantes :
la pose d'un échantillon d'essai avec des marquages de référence sur le support (10, 11) ou la plateforme de construction (12) ou l'exposition des marquages de référence directement sur le support (10, 11) ou la plateforme de construction (12),
le déplacement répété du dispositif de balayage (17) au-dessus des marquages de référence et l'enregistrement d'une image des marquages de référence, dans lequel, à chaque répétition, le support (10, 11) est soulevé ou abaissé d'une hauteur prédéfinie,
le fait de déterminer quel marquage de référence est reproduit de la manière la plus nette dans quelle image, et
la détermination d'un profil de hauteur du support (10, 11) ou de la plateforme de construction (12) à partir des images dans lesquelles les marquages de référence sont reproduits de la manière la plus nette, et des positions des marquages de référence respectifs.

15. Procédé de fabrication d'un objet (2) tridimensionnel au moyen d'un procédé de commande de processus selon l'une quelconque des revendications 10 à 14, avec les étapes :
d'application d'une couche (31) d'un matériau pulvérulent (15) avec un dispositif de revêtement (16) par déplacement du dispositif de revêtement au-dessus d'un champ de construction (8) ;
de solidification de la couche (31) aux endroits correspondant à une section transversale de l'objet (2) ; et
de répétition des étapes de l'application et de la solidification, jusqu'à ce que l'objet (3) tridimensionnel soit achevé,
dans lequel, dans le cadre du procédé de commande de processus, le champ de construction (8) est balayé au moins en partie par le dispositif de balayage (17) pendant une application de couche.
